# EUROPÄISCHE PATENTSCHRIFT

(11) **EP 4 377 120 B1**
(45) Veröffentlichungstag und Bekanntmachung des Hinweises auf die Patenterteilung: **03.09.2025**
(21) Anmeldenummer: 22744750.5
(22) Anmeldetag: 15.07.2022
(51) Int. Cl.: B60K 35/10, B60K 35/28, B60K 35/85

(54) **VERFAHREN ZUR BEREITSTELLUNG VON AUF DIE BEWEGUNG EINES FAHRZEUGS ABGESTIMMTEN MEDIENINHALTEN UND FAHRZEUG**
METHOD FOR PROVIDING MEDIA CONTENT WHICH IS ADAPTED TO THE MOVEMENT OF A VEHICLE, AND VEHICLE
PROCÉDÉ POUR FOURNIR UN CONTENU MULTIMÉDIA ADAPTÉ AU DÉPLACEMENT D'UN VÉHICULE ET VÉHICULE

(30) Priorität: 27.07.2021 DE 102021003887
(43) Veröffentlichungstag der Anmeldung: 05.06.2024
(73) Patentinhaber: Mercedes-Benz Group AG, 70372 Stuttgart (DE)
(72) Erfinder: HANUSCHKIN, Alexander, 71263 Weil der Stadt (DE); BOTSCHEN, Teresa, 75382 Althengstett (DE)
(74) Vertreter: Novagraaf Group
(86) Internationale Anmeldenummer: PCT/EP2022/069846
(87) Internationale Veröffentlichungsnummer: WO 2023/006447

(56) Entgegenhaltungen:
- DE-A1- 102019 108 645
- US-A1- 2019 200 091
- US-B1- 10 147 324

## Beschreibung

Die Erfindung betrifft ein Verfahren zur Bereitstellung von auf die Bewegung eines Fahrzeugs abgestimmten Medieninhalten nach dem Oberbegriff des Anspruchs 1 sowie ein Fahrzeug gemäß Anspruch 11 zur Durchführung des Verfahrens.

In bestimmten Szenarios kann während der Fahrt für eine fahrzeugführende Person Langeweile auftreten. Dies ist insbesondere der Fall beim Erleben monotoner Fahrabschnitte. Ein solcher monotoner Fahrabschnitt liegt beispielsweise bei Stau vor und/oder während der Fahrt mit einem zumindest teilautomatisiert, insbesondere hochautomatisiert steuerbaren Fahrzeug.

Zur Vermeidung von Langeweile können Fahrzeuginsassen mit Hilfe eines Infotainmentsystems Unterhaltungsmedien konsumieren, wie Musik hören, Filme schauen, Radio hören, Videospiele spielen oder dergleichen. Fahrzeuginsassen können sich auch mit Hilfe von Büchern oder mobilen Endgeräten wie einem Smartphone oder Tabletcomputer ablenken.

Ferner sind Verfahren zur Übertragung von Telemetriedaten aus einem bewegten System in ein statisches System bekannt. So werden beispielsweise in der Formel 1 einen Fahrzeugzustand beschreibende Sensordaten und ein Live-Feed einer Onboard-Kamera aus dem Rennwagen in den Führerstand eines Rennteams zur Überwachung und Systemanalyse, sowie an einen TV-Sender zur Präsentation der Telemetriedaten an Zuschauer, übertragen.

Die DE 10 2019 108 645 A1 zeigt ein System, das es erlaubt, von einer Kamera eines Kraftfahrzeugs aufgenommene Bilder oder Videos der Fahrzeugumgebung drahtlos an ein weiteres Kraftfahrzeug zu senden, um Wahrnehmungen einer Situation, wie beispielsweise ein Hindernis auf der Fahrbahn, zwischen den Fahrzeugen auszutauschen. Damit kann ein solches Hindernis auf einer Anzeige des Bilder empfangenden Kraftahrzeugs dargestellt werden, das von der eigenen Kamera dieses Fahrzeugs nicht gesehen werden kann. Zudem können die Bilder, sowohl die der eigenen Kamera als auch die empfangenen Bilder zur Steuerung des Kraftfahrzeugs verwendet werden. Es ist weiter bekannt, dass Daten aus einem Navigationssystem zur Steuerung des Fahrzeugs verwendet werden können. Üblicherweise besitzen oder erfassen Steuerungen für Kraftfahrzeuge auch Fahrdynamikinformationen, was in der DE 10 2019 108 645 A1 jedoch nicht explizit offenbart ist. Somit ist aus dieser DE 10 2019 108 645 A1 ein Verfahren zur Bereitstellung von abgestimmten Medieninhalten zwischen Fahrzeugen und/oder eine Infrastruktur, zum Beispiel ein Server, bekannt, bei dem von einem ersten Fahrzeug aktuelle Fahrdynamikinformationen erfasst werden, künftige Fahrdynamikinformationen zumindest des ersten Fahrzeugs, ggf. aus dem Navigationssystem, abgeschätzt werden, sowie mit einer Fahrzeugkamera aufgezeichnete Kamerabilder an eine zentrale Recheneinheit (4) gesendet werden.

Aus der US 10,147,324 B1 ist ein Verfahren zur Unterstützung eines Nutzers eines Fahrzeugs basierend auf Verkehrsverhaltensmodellen bekannt. Die Druckschrift beschreibt ein Fahrzeug, welches ein Verkehrsverhalten von weiteren Verkehrsteilnehmern bestimmt und in Abhängigkeit des Verkehrsverhaltens der weiteren Verkehrsteilnehmer sein eigenes Verkehrsverhalten, sprich Manöververhalten, anpasst. Hierzu können Steuerungshinweise zur manuellen Steuerung an eine fahrzeugführende Person ausgegeben werden und/oder Steuerbefehle zur zumindest teilautomatisierten Steuerung des Fahrzeugs erzeugt werden. Zum Abschätzen des erwarteten Verhaltens der weiteren Verkehrsteilnehmer wird ein typischerweise in der entsprechenden Verkehrssituation von entsprechenden Verkehrsteilnehmern erwartetes Verhalten aus einer Datenbank ausgelesen. Zur Analyse der Verkehrssituation werden dabei unter anderem Kamerabilder ausgewertet. Unter Berücksichtigung geltender Verkehrsregeln wie Geschwindigkeitsbegrenzungen, ein vorhandener Streckenverlauf, erkannte Fahrspuren oder dergleichen, wird dann ein erwartetes Manöververhalten der Verkehrsteilnehmer abgeschätzt. Dabei werden von Fahrzeugen erhobene Sensorwerte mittels Fahrzeug-zu-Fahrzeug-Kommunikationsschnittstelle unter den Fahrzeugen direkt ausgetauscht und/oder drahtlos an eine zentrale Recheneinheit verschickt.

Ferner offenbart die US 2019/0200091 A1 ein System und Verfahren zur Kontrolle einer Anzeigevorrichtung, um eine virtuelle Umgebung in einem Fahrzeug generieren. Dabei werden auf einer Anzeigevorrichtung im Fahrzeug Videos einer vergangenen Fahrt mit demselben oder einem anderen Fahrzeug abgespielt, wobei sich die Fahrstrecken der respektiven Fahrzeuge bezüglich ihres Kurvenverlaufs und Weglänge ähneln. Damit das Video zur aktuellen Fahrdynamik passt, kann dessen Abspielgeschwindigkeit verändert werden.

Der vorliegenden Erfindung liegt die Aufgabe zugrunde, ein Verfahren zur Bereitstellung von auf die Bewegung eines Fahrzeugs abgestimmten Medieninhalten zur Verbesserung eines Komforts für Fahrzeuginsassen eines Fahrzeugs während der Fahrt anzugeben.

Erfindungsgemäß wird diese Aufgabe durch ein Verfahren zur Bereitstellung von auf die Bewegung eines Fahrzeugs abgestimmten Medieninhalten mit den Merkmalen des Anspruchs 1 gelöst. Vorteilhafte Ausgestaltungen und Weiterbildungen, sowie ein Fahrzeug zur Durchführung des Verfahrens ergeben sich aus den hiervon abhängigen Ansprüchen.

Bei einem Verfahren zur Bereitstellung von auf die Bewegung eines Fahrzeugs abgestimmten Medieninhalten werden zumindest die folgenden Verfahrensschritte durchgeführt:
- Erfassen von aktuellen Fahrdynamikinformationen zumindest eines ersten Fahrzeugs;
- Abschätzen von künftigen Fahrdynamikinformationen zumindest des ersten Fahrzeugs; und
- Übertragen der aktuellen und künftigen Fahrdynamikinformationen sowie von mit einer Fahrzeugkamera aufgezeichneten Kamerabildern an eine zentrale Recheneinheit.

Erfindungsgemäß zeichnet sich das Verfahren durch folgende Schritte aus:
- Bereitstellen der aktuellen und/oder künftigen Fahrdynamikinformationen sowie der Kamerabilder von der zentralen Recheneinheit zur Ausgabe mit einem Drittgerät;
   und/oder
- Identifizieren von zumindest den aktuellen und/oder den künftigen Fahrdynamikinformationen des ersten Fahrzeugs innerhalb einer Toleranzgrenze entsprechenden aktuellen und/oder künftigen Fahrdynamikinformationen zumindest eines zweiten Fahrzeugs von der zentralen Recheneinheit;
- Übertragen der aktuellen und/oder künftigen Fahrdynamikinformationen sowie der Kamerabilder zumindest des zweiten Fahrzeugs an das erste Fahrzeug; und
- Ausgabe zumindest der Kamerabilder des zweiten Fahrzeugs auf wenigstens einer Anzeigerichtung des ersten Fahrzeugs.

Mit Hilfe des erfindungsgemäßen Verfahrens sind Fahrzeuginsassen wie eine fahrzeugführende Person, ein Beifahrer oder Fahrgäste im Fond, dazu in der Lage, eine gleichzeitig mit einem anderen Fahrzeug durchgeführte Fahrt zu erleben. Dies sorgt für Unterhaltung der Fahrzeuginsassen, da diese somit einen "Blick über den Tellerrand" während der Nutzung des eigenen Fahrzeugs erfahren. Beispielsweise fährt das erste Fahrzeug in einem Ballungsraum in Deutschland. Das zweite Fahrzeug bewegt sich ebenfalls in einem Ballungsraum in Indien. Dies ermöglicht es den Fahrzeuginsassen während einer monotonen Verkehrssituation zumindest gedanklich zu verreisen.

Die im ersten Fahrzeug ausgegebenen Kamerabilder stammen von einem zweiten Fahrzeug, welches eine zum ersten Fahrzeug entsprechende Fahrdynamik aufweist. Da die im ersten Fahrzeug auftretenden Beschleunigungskräfte somit den im zweiten Fahrzeug wirkenden Beschleunigungskräften innerhalb einer Toleranzgrenze entsprechen, lassen sich die im ersten Fahrzeug ausgegebenen Kamerabilder ohne das Auftreten von Kinetose betrachten. Ist ein Fahrzeuginsasse dabei nicht dazu in der Lage die eigene Umgebung um das erste Fahrzeug wahrzunehmen, beispielsweise weil es Nacht ist oder eine Sicht aus einem Fahrzeugfenster versperrt ist, so kann einem Auftreten von Kinetose durch das Betrachten der Kamerabilder entgegengewirkt werden.

Zu den Fahrdynamikinformationen zählen beispielsweise eine Fahrzeuggeschwindigkeit, eine Beschleunigung sowie ein Lenkwinkel. Fährt also das erste Fahrzeug beispielsweise mit einer bestimmten Geschwindigkeit wie 30 km/h eine Linkskurve, so werden nur solche Kamerabilder im ersten Fahrzeug angezeigt, bei denen auch das zweite Fahrzeug eine Linkskurve mit 30 km/h fährt. Das zweite Fahrzeug wird so ausgewählt, dass die Fahrdynamikinformationen innerhalb einer festgelegten Toleranzgrenze übereinstimmen. Dies bedeutet, dass das zweite Fahrzeug auch beispielsweise eine Linkskurve mit einem leicht unterschiedlichen Lenkwinkel, beispielsweise einen um +1° oder -2° verschiedenen Lenkwinkel, sowie einer leicht unterschiedlichen Geschwindigkeit wie 28 km/h oder 35 km/h fahren kann, um als zur Darstellung im ersten Fahrzeug geeignet klassifiziert zu werden.

Analog können zumindest auch die vom ersten Fahrzeug aufgenommenen Kamerabilder und gegebenenfalls auch zusätzlich die Fahrdynamikinformationen im zweiten Fahrzeug ausgegeben werden.

Zum Auffinden wenigstens zweier Fahrzeuge mit den innerhalb der festgelegten Toleranzgrenze übereinstimmender Fahrdynamikinformationen ist von der zentralen Recheneinheit ein gewisser Zeitaufwand erforderlich. Durch das Abschätzen von künftigen Fahrdynamikinformationen lässt sich der von der zentralen Recheneinheit zum einander zuordnen, sprich Matchen, der Fahrzeuge aufeinander erforderliche Zeitdauer überbrücken. Dies gewährleistet, dass die Fahrdynamiken der beiden aufeinander gematchten Fahrzeuge auch zeitlich tatsächlich übereinstimmen. Auch hier bedeutet eine Übereinstimmung, dass es einen zeitlichen Versatz zwischen den Fahrdynamiken der beiden Fahrzeuge geben darf. So kann beispielsweise eine Kurvenfahrt und damit das Auftreten von seitlichen Beschleunigungskräften bei einem der Fahrzeuge beispielsweise 500ms früher auftreten, als beim anderen Fahrzeug. Die Zeitdifferenz ist dabei zwischen den Fahrzeugen so klein, dass sich die Fahrdynamiken der Fahrzeuge für die jeweiligen Fahrzeuginsassen der Fahrzeuge gleich anfühlen.

Ferner bietet das erfindungsgemäße Verfahren die Möglichkeit zur sozialen Interaktion der Fahrzeuginsassen. Wird dies von den Fahrzeuginsassen gewünscht, so kann auch eine Funktion bereitgestellt werden, welche es ermöglicht mit den Fahrzeuginsassen des zweiten Fahrzeugs in Kontakt zu treten. So können beispielsweise die Fahrzeuginsassen des ersten Fahrzeugs mit den Fahrzeuginsassen des zweiten Fahrzeugs chatten oder telefonieren. Hierdurch können sich die Fahrzeuginsassen des ersten Fahrzeugs und auch des zweiten Fahrzeugs noch umfangreicher von einer monotonen Fahrsituation ablenken. Bevorzugt wird die Kontaktfunktion nur für Fahrzeugpaare bereitgestellt, bei denen es in der Vergangenheit bereits zu einer festgelegten Mindestanzahl und/oder Mindestdauer an Matchvorgängen kam. Dies erhöht die Wahrscheinlichkeit, dass die Fahrzeuginsassen der jeweiligen Fahrzeuge Interesse aneinander zeigen, da sie sich bereits "kennen".

Die aus dem zweiten Fahrzeug in das erste Fahrzeug übertragenen Kamerabilder, hierbei kann es sich allgemein um Fotos oder Videoaufzeichnungen handeln, können auf einer beliebigen Anzeigeeinrichtung dargestellt werden. Hierzu kann beispielsweise eine Head-Unit, ein Kombiinstrument, eine Head-Up-Display (HUD) oder auch eine in eine Scheibe des Fahrzeugs integrierte Virtual Reality oder Augmented Reality Projektionsfläche dienen. Auch kann ein Fahrzeuginsasse beispielsweise eine Virtual Reality oder Augmented Reality Brille zur Darstellung der Kamerabilder verwenden.

Auch ist es möglich, dass die aus dem ersten Fahrzeug gewonnenen aktuellen und/oder künftigen Fahrdynamikinformationen, sowie die Kamerabilder von der zentralen Recheneinheit an ein Drittgerät weitergegeben werden. Bei diesem Drittgerät kann es sich beispielsweise um einen Simulator handeln. Ein solcher Simulator kann beispielsweise in einem Vergnügungspark aufgestellt sein oder von einem Fahrzeughersteller betrieben werden, um Fahrzeuge zu entwickeln. Beispielsweise kann der Simulator eine Leinwand umfassen, auf die die Kamerabilder des ersten Fahrzeugs projiziert werden. Der Simulator kann auch Aktoren, insbesondere sechs Aktoren, auch als "Hexpod" bezeichnet, aufweisen, durch die der Simulator entsprechend der Fahrdynamikinformationen des ersten Fahrzeugs bewegt wird. Dies erlaubt es den Nutzern des Simulators die Fahrdynamik des ersten Fahrzeugs zu erfahren.

Da zum Ansteuern der Aktoren des Simulators die künftigen Fahrdynamikinformationen des ersten Fahrzeugs verwendet werden bzw. zum Ableiten von Steuersignalen der Aktoren die künftigen Fahrdynamikinformationen weiterverarbeitet werden, kommt es zu keiner Zeitverzögerung zwischen der im ersten Fahrzeug wahrgenommen Fahrdynamik und der im Simulator erlebten Fahrdynamik. Dies ermöglicht es, Limitationen von Aktorfunktionen auszugleichen. So kann beispielsweise ein limitierter maximaler Aktorhub und/oder eine maximale Aktorbeschleunigung zum Ansteuern der Aktoren des Simulators berücksichtigt werden.

Zur Erzeugung der Kamerabilder kann eine beliebige Fahrzeugkamera verwendet werden. Bevorzugt ist die Fahrzeugkamera in Fahrtrichtung des Fahrzeugs ausgerichtet. Auch können mehrere, insbesondere abweichend orientierte Fahrzeugkameras Kamerabilder aufzeichnen und diese zwischen den Fahrzeugen ausgetauscht werden. Ganz bevorzugt weisen die beiden Fahrzeugkameras deren Kamerabilder zwischen den Fahrzeugen ausgetauscht werden, in Relation zu einer Fahrzeuglängsachse, die selbe Orientierung auf. Dies verbessert das Immersionsgefühl für die Fahrzeuginsassen beim Betrachten der jeweiligen aus dem anderen Fahrzeug übertragenen Kamerabilder.

Zusätzlich zu den Kamerabildern können auch die Fahrdynamikinformationen oder auch nur ein Teil der Fahrdynamikinformationen im weiteren Fahrzeug bzw. dem Drittgerät angezeigt werden. Beispielsweise kann eine Ausgabe der aktuellen oder der abgeschätzten Fahrgeschwindigkeit des Fahrzeugs erfolgen.

Zur Datenübertragung der Fahrdynamikinformationen sowie der Kamerabilder aus einem Fahrzeug an die zentrale Recheneinheit können beliebige drahtlose Kommunikationstechnologien wie Mobilfunk, WiFi, Bluetooth oder dergleichen verwendet werden.

Eine vorteilhafte Weiterbildung des Verfahrens sieht vor, dass zusätzlich zu den Kamerabildern, sowie den aktuellen und/oder künftigen Fahrdynamikinformationen, Zusatzinformationen zur Ausgabe an wenigstens ein Drittgerät und/oder wenigstens ein zweites Fahrzeug übertragen werden. Werden von der zentralen Recheneinheit wenigstens drei oder noch mehr Fahrzeuge mit ähnlichen, sprich innerhalb der Toleranzgrenze liegenden Fahrdynamikinformationen gefunden, so können die Kamerabilder und bei Bedarf die aktuellen und/oder künftigen Fahrdynamikinformationen, im Folgenden als Medieninhalte bezeichnet, auch zwischen mehreren Fahrzeugen geteilt werden. Zusätzlich können zudem Zusatzinformationen an die jeweiligen Fahrzeuge und die jeweiligen Drittgeräte übertragen werden. Dabei ist es möglich, dass zumindest die Zusatzinformationen über eine Fahrzeug-zu-Fahrzeug-Kommunikationsschnittstelle auch direkt, sprich unmittelbar, zwischen den Fahrzeugen ausgetauscht werden. Die Zusatzinformationen können jedoch auch mittelbar, sprich über die zentrale Recheneinheit, zwischen den Fahrzeugen ausgetauscht werden.

Entsprechend einer weiteren vorteilhaften Ausgestaltung des Verfahrens wird zumindest eine der folgenden Größen als Zusatzinformation verwendet:
- einen Zustand des ersten Fahrzeugs beschreibende Zustandsinformationen;
- einen Zustand der Umgebung des ersten Fahrzeugs beschreibende Umgebungsinformationen; und/oder
- eine Audiospur, bevorzugt eine Audiospur in Form von Außenmikrofonaufnahmen.

Mit Hilfe der Zusatzinformationen sind die Fahrzeuginsassen des ersten und zweiten Fahrzeugs, sowie die Nutzer des Drittgeräts dazu in der Lage, noch detaillierte Informationen aus den entsprechenden an der Bereitstellung der Medieninhalte beteiligten Fahrzeugen, zu empfangen. Demgemäß ist auch eine Übertragung von Zusatzinformationen aus dem zweiten Fahrzeug in das erste Fahrzeug möglich.

Bei den Zustandsinformationen handelt es sich beispielsweise um eine Geoposition des Fahrzeugs, einen aktuellen Tankinhalt des Fahrzeugs, eine Routeninformation einer von einem Startort zu einem Zielort reichenden, mit dem Fahrzeug befahrenen Route, eine Öltemperatur des Fahrzeugs oder dergleichen.

Bei den Umgebungsinformationen handelt es sich beispielsweise um eine aktuelle Ortszeit, eine Umgebungstemperatur, eine aktuelle Witterung, sprich aktuelles Wetter wie Sonne, Regen, Schnee oder dergleichen, eine Information über ein aktuelles Verkehrsaufkommen oder dergleichen.

Mit Hilfe der Audiospur, insbesondere in Form von Außenmikrofonaufnahmen, können die Fahrzeuginsassen des ersten Fahrzeugs zudem auch die Akustik in der näheren Umgebung um das zweite Fahrzeug wahrnehmen bzw. die Fahrzeuginsassen des zweiten Fahrzeugs die Akustik um das ersten Fahrzeug wahrnehmen. Dies ermöglicht ein noch immersiveres Erlebnis bei der Nutzung des erfindungsgemäßen Verfahrens. Fährt das erste Fahrzeug beispielsweise durch einen Stau in einer Stadt und das zweite Fahrzeug durch einen Basar in Neu Delhi, so können Fahrzeuginsassen des ersten Fahrzeugs die Geräusche auf dem Basar in New Delhi wahrnehmen. Auch ist es möglich, dass beispielsweise Geräusche aus einem Motorraum oder in der Nähe eines Auspuffs aufgezeichnet werden, um beispielsweise die Motorgeräusche eines Fahrzeugs an das andere zu übertragen. Auch können Audioaufzeichnungen im Fahrzeuginnenraum durchgeführt werden. So können beispielsweise die Fahrzeuginsassen der verschiedenen Fahrzeuge miteinander telefonieren.

Eine weitere vorteilhafte Ausgestaltung des Verfahrens sieht ferner vor, dass ein aktueller und/oder künftiger Streckenverlauf einer vom ersten Fahrzeug befahrenen Strecke, eine aktuelle und/oder künftige Verkehrssituation und/oder eine Fahrtrajektorienplanung zur Ermittlung der künftigen Fahrdynamikinformationen berücksichtigt wird. Es ist damit zu rechnen, dass das erste Fahrzeug dem aktuellen bzw. dem künftigen Streckenverlauf folgt. Somit lassen sich aus dem Streckenverlauf die künftigen Fahrdynamikinformationen abschätzen. Eine Verkehrssituation kann vorsehen, dass Stau oder stockender Verkehr vorherrscht oder ein Fahrzeug auf einer freien Straße freie Fahrt hat. So kann unter Berücksichtigung der Verkehrssituation die künftige Fahrdynamik noch zuverlässiger abgeschätzt werden. Befährt das erste Fahrzeug beispielsweise eine gerade Straße, so könnten die Fahrdynamikinformationen eine konstante Geschwindigkeit, keinen Lenkwinkel und keine Beschleunigung umfassen. Fährt das Fahrzeug jedoch auf ein Stauende zu oder bewegt sich im stockendem Verkehr, so treten beispielsweise Lenkwinkeländerungen zum Durchführen eines Spurwechsels oder Längs- und/oder Querbeschleunigungen auf. Bei einem zumindest teilautomatisiert steuerbaren Fahrzeug kann zudem auch eine Fahrtrajektorienplanung zur Ermittlung der künftigen Fahrdynamikinformationen berücksichtigt werden. Mit Hilfe einer Fahrtrajektorienplanung lassen sich noch zuverlässiger künftige Fahrdynamikinformationen abschätzen, da die in Kürze vom Fahrzeug vollführten Fahrmanöver durch ein Steuergerät vorgegeben werden und somit bekannt sind.

Entsprechend einer weiteren vorteilhaften Ausgestaltung des erfindungsgemäßen Verfahrens werden ein Streckenverlauf und/oder eine Verkehrssituation bestimmt durch:
- eine Bildanalyse zumindest eines von der Fahrzeugkamera erzeugten Kamerabilds,
- Extraktion einer aus einem Assistenzsystem ausgeleiteten Größe; und/oder
- Analyse digitalen Kartenmaterials, insbesondere während einer aktiven Navigation.

Mit Hilfe von Bildanalyse lässt sich aus von der Kamera erzeugten Kamerabildern der aktuelle und gegebenenfalls auch der künftige Streckenverlauf erkennen. Analog lässt sich durch Bildanalyse auch eine aktuelle Verkehrssituation erkennen. Befinden sich in einem bestimmten Kamerabild beispielsweise besonders viele Fahrzeuge, so kann von Stau oder stockendem Verkehr ausgegangen werden. Es kann auch eine Änderung einer Verkehrsteilnehmerdichte in aufeinanderfolgenden Kamerabildern ausgewertet werden, um eine künftige Verkehrssituation abzuschätzen. Nimmt beispielsweise mit fortschreitender Zeitdauer eine Anzahl von Fahrzeugen in aufeinanderfolgenden Kamerabildern zu, so kann auf einen sich anbahnenden Stau geschlossen werden. Analog kann durch Erkennen eines Stoppschilds oder einer roten Ampel auf ein baldiges Bremsmanöver geschlossen werden. Verkehrszeichen, Lichtzeichenanlagen, ein Streckenverlauf oder dergleichen lässt sich auch durch Analyse digitalen Kartenmaterials feststellen. Wird dabei aktiv eine Navigation durchgeführt, so ist auch bekannt, beispielsweise in welche Richtung ein Fahrzeug an einer Kreuzung oder Einmündung abbiegen wird. Somit kann die zukünftige Fahrdynamikinformation noch zuverlässiger abgeschätzt werden.

Der Streckenverlauf und/oder die Verkehrssituation kann auch durch Extraktion einer aus einem Assistenzsystem ausgeleiteten Größe bestimmt werden. Bei einer solchen Größe handelt es sich beispielsweise um eine Raddrehzahl, Beschleunigungskräfte, eine mit Hilfe eines Radarsystems oder LiDAR-Systems errechnete Abstandsinformation oder dergleichen. Insbesondere durch Sensorfusion bzw. Messwertfusion lassen sich künftige Fahrdynamikinformationen noch zuverlässiger abschätzen.

Eine weitere vorteilhafte Ausgestaltung des Verfahrens sieht ferner vor, dass eine fahrzeugführende Person des ersten Fahrzeugs identifiziert und ihr ein eindeutiges Profil zugeordnet wird. Mit Hilfe eines eindeutigen Nutzerprofils können Fahrdynamikinformationen noch zuverlässiger abgeschätzt werden. So ist eine künftige Fahrdynamikinformation, sprich beispielsweise eine Seitenbeschleunigung beim Durchfahren einer Kurve, neben dem reinen Streckenverlauf und der Verkehrssituation, auch von der Fahrweise einer fahrzeugführenden Person abhängig. Eine erste Person durchfährt beispielsweise eine Kurve vergleichsweise langsam und eine zweite Person durchfährt dieselbe Kurve beispielsweise mit einer höheren Geschwindigkeit, da die zweite Person zu einer sportlichen Fahrweise neigt. Durch Berücksichtigen der Person, die das Fahrzeug führt, lässt sich somit noch zuverlässiger die künftige Fahrdynamikinformation abschätzen.

Zum Identifizieren von Personen können verschiedene allgemein bekannte Methoden und Verfahren eingesetzt werden. So kann eine Person beispielsweise anhand biometrischer Merkmale wie durch einen Iris-Scan, eine Stimmanalyse, Gesichtserkennung, einen Fingerabdruckscan oder dergleichen erkannt werden. Auch ist es denkbar, dass verschiedene Personen ein eigenes Nutzerprofil aufweisen, wobei sich eine entsprechende Person durch eine Kombination von Nutzernamen und persönlichem Passwort am Fahrzeug anmeldet. Hierzu können entsprechende Login-Daten über das Infotainmentsystem des Fahrzeugs oder auch ein mit dem Fahrzeug in Kommunikationsverbindung stehendes mobiles Endgerät eingegeben werden. Auch kann eine Person eindeutig mit Hilfe eines individuellen Fahrzeugschlüssels erkannt werden. Dabei ist auf dem Fahrzeugschlüssel eine eindeutige Kennung der Person hinterlegt, beispielsweise in Form eines digitalen Hashwerts. Dabei kann der Fahrzeugschlüssel von einem physischen, insbesondere Funkschlüssel ausgebildet werden, oder auch von einer auf einem mobilen Endgerät ausgeführten Software ausgebildet werden. Dabei kann beispielsweise eine Kommunikation zwischen Fahrzeugschlüssel und Fahrzeug über Ultrabreitbandkommunikation erfolgen.

Entsprechend einer weiteren vorteilhaften Ausgestaltung des erfindungsgemäßen Verfahrens werden zum Abschätzen der künftigen Fahrdynamikinformationen Methoden des maschinellen Lernens eingesetzt. Mit Hilfe von Methoden des maschinellen Lernens können die künftigen Fahrdynamikinformationen noch zuverlässiger abgeschätzt werden.

So kann beispielsweise ein künstliches neuronales Netz zur Auswertung von Kamerabildern verwendet werden. Insbesondere wird das in einem Nutzerprofil hinterlegte Fahrverhalten eines Nutzers mit Hilfe von künstlicher Intelligenz trainiert. Je länger eine bestimmte Person also ein bestimmtes Fahrzeug nutzt, desto besser lernt das Fahrzeug das Fahrverhalten der entsprechenden Person. Somit kann das Fahrzeug auch noch zuverlässiger die künftigen Fahrdynamikinformationen personenspezifisch abschätzen. Ein entsprechendes künstliches neuronales Netz kann beispielsweise während der Herstellung des Fahrzeugs angelernt werden und während der Nutzung des Fahrzeugs durch Auswertung eines entsprechenden Fahrverhaltens, für verschiedene Personen individualisiert werden.

Eine weitere vorteilhafte Ausgestaltung des Verfahrens sieht ferner vor, dass die zentrale Recheneinheit die von verschiedenen Fahrzeugen befahrenden Strecken miteinander vergleicht und Strecken mit einem über einer Mindeststreckenlänge innerhalb einer festgelegten Toleranzschwelle ähnlichem Streckenverlauf einander zuordnet. Durch das einander zuordnen ähnlicher Strecken können zumindest zwei Fahrzeuge, die solche "ähnlichen Strecken" befahren, noch schneller aufeinander gematcht werden und die entsprechenden Kamerafeeds im jeweils anderen Fahrzeug angezeigt werden. Hierdurch sinkt ein Rechenbedarf bzw. Zeitaufwand zum Aufeinandermatchen verschiedener Fahrzeuge. Dies ermöglicht das Anzeigen von Fahrdynamikinformationen und/oder Kamerafeeds in unterschiedlichen Fahrzeugen, auch wenn die künftigen Fahrdynamikinformationen nur grob abgeschätzt werden konnten. Dabei können verschiedene Strecken weltweit miteinander verglichen werden.

Je mehr Fahrzeuge eine bestimmte Strecke bzw. einen bestimmten Streckenabschnitt befahren, desto zuverlässiger lassen sich auch mit Hilfe von statistischen Methoden während des Befahrens eines bestimmten Streckenabschnitts bzw. einer bestimmten Strecke, dabei vorliegende Fahrdynamikinformationen ermitteln. Damit mehrere Strecken bzw. Streckenabschnitte innerhalb der festgelegten Toleranzschwelle als ähnlich klassifiziert werden, müssen sich diese über die Mindeststreckenlänge, beispielsweise 10 Meter, 100 Meter oder auch mehrere Kilometer, denselben Verlauf aufweisen, sprich geradeaus reichen, und/oder eine beliebige Anzahl an Kurven aufweisen. Dabei können die Kurven denselben Kurvenradius oder auch einen leicht abweichenden Kurvenradius aufweisen. Befahren ein erstes und ein zweites Fahrzeug ähnliche Strecken, so werden die jeweiligen aktuellen und/oder künftigen Fahrdynamikinformationen sowie die Kamerabilder der einzelnen Fahrzeuge untereinander ausgetauscht. Treten die entsprechenden Fahrzeuge aus dem ähnlichen Streckenabschnitt aus, so wechselt auch das Fahrzeug, aus dem beispielsweise das erste Fahrzeug entsprechende Medieninhalte empfängt. Mit anderen Worten wird im ersten Fahrzeug beim Verlassen eines ähnlichen Streckenabschnitts die Wiedergabe von Fahrdynamikinformationen und Kamerabildern des zweiten Fahrzeugs beendet und die Wiedergabe von Fahrdynamikinformationen und Kamerabildern eines dritten Fahrzeugs, welches einen jetzt zum vom ersten Fahrzeug ähnlichen Streckenabschnitt befährt, gestartet.

Entsprechend einer weiteren vorteilhaften Ausgestaltung des erfindungsgemäßen Verfahrens werden Nutzerpräferenzen für die Auswahl und/oder Darstellung von Medieninhalten berücksichtigt. Bei den Medieninhalten handelt es sich zumindest um die Kamerabilder, sowie bei Bedarf um die aktuellen und/oder künftigen Fahrdynamikinformationen. Es können auch zusätzlich die Zusatzinformationen dargestellt werden. Unter Berücksichtigung von Nutzerpräferenzen kann ein Nutzer des erfindungsgemäßen Verfahrens beispielsweise angeben, dass er nur Kamerabilder von Fahrzeugen empfangen möchte, welche entweder in einer ähnlichen geographischen Region wie das eigene Fahrzeug fahren, beispielsweise im selben Land, demselben Bundesland oder im selben Landkreis. Analog kann der Nutzer auch festlegen, dass er nur Kamerabilder empfangen will von Fahrzeugen, welche beispielsweise in einem anderen Land fahren. Beispielsweise kann der Nutzer auch festlegen, dass er nur Kamerabilder von Fahrzeugen empfangen will, welche ein Fahrgeschehen nur bei Tag oder auch nur bei Nacht zeigen. Entsprechend kann der Nutzer auch festlegen, dass die Witterung um das zweite Fahrzeug der Witterung um das erste Fahrzeug entsprechen soll oder zu dieser abweicht. Fährt das erste Fahrzeug beispielsweise im Winter durch eine verschneite Landschaft, so kann der Nutzer festlegen, dass nur Kamerabilder von zweiten Fahrzeugen berücksichtigt werden, welche ebenfalls durch eine Winterlandschaft fahren oder aber welche beispielsweise bei Sonne entlang einer Strandpromenade fahren.

Auch kann der Nutzer Präferenzen zur Darstellung der Medieninhalte festlegen. So kann der Nutzer beispielsweise angeben, dass die im ersten Fahrzeug angezeigten Kamerabilder eines zweiten Fahrzeugs bearbeitet werden. So kann ein entsprechender Kamerafeed aus dem zweiten Fahrzeug beispielsweise aufgehellt oder in einer Farbwiedergabe verändert werden. Ein bei Nacht erfasster Kamerafeed kann beispielsweise aufgehellt werden, sodass dunkle Kamerabilder bei Tag besser zu erkennen sind. Auch hierzu können Methoden der künstlichen Intelligenz, wie das maschinelle Lernen, eingesetzt werden.

Bevorzugt wird aus den von einem zweiten Fahrzeug an das erste Fahrzeug übertragenen Fahrdynamikinformationen zumindest ein Hinweis zur manuellen Steuerung des ersten Fahrzeugs durch die fahrzeugführende Person abgeleitet und/oder zumindest ein Steuerbefehl zur zumindest teilautomatisierten Steuerung des ersten Fahrzeugs abgeleitet. Ist beispielsweise das zweite Fahrzeug dazu in der Lage, künftige Fahrdynamikinformationen besonders zuverlässig, sprich genau, abzuschätzen und das erste Fahrzeug dazu in der Lage, die künftigen Fahrdynamikinformationen nur grob abzuschätzen, so können die Fahrdynamikinformationen des zweiten Fahrzeugs ins erste Fahrzeug übertragen werden und dort zur Ausgabe von Steuerungshinweisen und/oder Steuerbefehlen genutzt werden. Somit lässt sich das erste Fahrzeug zuverlässiger und damit sicherer steuern. Hierdurch wird eine Verkehrssicherheit im Straßenverkehr verbessert.

Bei einem Fahrzeug mit wenigstens einer Fahrzeugkamera, einer Recheneinheit, einer drahtlosen Kommunikationsschnittstelle und wenigstens einer Anzeigeeinrichtung sind erfindungsgemäß die Fahrzeugkamera, Recheneinheit, drahtlose Kommunikationsschnittstelle und Anzeigeeinrichtung zur Durchführung eines im vorigen beschriebenen Verfahrens eingerichtet. Bei dem Fahrzeug kann es sich um ein beliebiges Fahrzeug wie einen Pkw, Lkw, Transporter, Bus, Rikscha oder dergleichen handeln. Zwischen mehreren Fahrzeugen ausgetauschte Kamerafeeds werden von Kameras aufgezeichnet, die in Relation zu einer Fahrzeuglängsachse eine gleiche Ausrichtung aufweisen. Dies stellt sicher, dass sich Fahrzeuginsassen besonders immersiv in eine Fahrsituation eines anderen Fahrzeugs hineinversetzen. Da die Fahrdynamikinformationen zwischen beiden Fahrzeugen übereinstimmen und die Darstellung der Kamerabilder den entsprechenden Fahrdynamikinformationen entsprechen, kann mit Hilfe eines erfindungsgemäßen Verfahrens auch Kinetose vorgebeugt werden. Beispielsweise kann das Fahrzeug Bildschirme in einer Rückenlehne eines Fahrer- oder Beifahrersitzes aufweisen. So kann auf den entsprechenden Bildschirmen ein Fahrgeschehen aus anderen Fahrzeugen eingespielt werden, woraufhin im Fond sitzende Fahrgäste diesem Fahrgesehen folgen können. Wechselt nun das Fahrzeug beispielsweise eine Spur, biegt ab oder beschleunigt oder bremst, so tut dies auch das Fahrzeug, dessen Kamerabilder auf den Displays dargestellt wird. Da die Bewegungen der beiden Fahrzeuge übereinstimmen, wird Kinetose der Fahrgäste im Fond vorgebeugt.

Mit Hilfe der Recheneinheit werden von Fahrzeugsensoren erfasste Sensorwerte, sowie die Kamerabilder der Fahrzeugkamera, erfasst und gegebenenfalls vor einer Übertragung über die drahtlose Kommunikationsschnittstelle an die zentrale Recheneinheit vorverarbeitet. Hierzu können auch mehrere Recheneinheiten verwendet werden. Bei einer solchen Recheneinheit handelt es sich beispielsweise um einen zentralen Bordcomputer, ein Steuergerät eines Fahrzeuguntersystems, eine Telemetrie- oder Telematikeinheit oder dergleichen. Eine Darstellung der Medieninhalte kann auf verschiedenen Anzeigen wie einer Head-Unit, einem Kombiinstrument, einem beliebigen Fahrzeugdisplay oder dergleichen erfolgen. Generell ist es auch denkbar, dass ein mobiles Endgerät wie ein Smartphone, Tablet, Laptop oder dergleichen mit dem Fahrzeug verbunden wird und die entsprechenden Medieninhalte auf dem mobilen Endgerät wiedergegeben werden.

Gemäß einer besonders vorteilhaften Ausführung des erfindungsgemäßen Fahrzeugs, ist dieses zumindest teilautomatisiert steuerbar. Bei einem zumindest teilautomatisiert, bevorzugt hochautomatisiert steuerbaren Fahrzeug, können Verkehrssituationen auftreten, in denen die fahrzeugführende Person selbst das Fahrzeug nicht aktiv steuern muss. Besonders in einer solchen Situation kann sich die fahrzeugführende Person schnell langweilen. Mit Hilfe des erfindungsgemäßen Verfahrens kann sich die fahrzeugführende Person jedoch ablenken. Hierdurch wird ein Komfort für die fahrzeugführende Person, sowie auch für weitere Fahrzeuginsassen verbessert.

Weitere vorteilhafte Ausgestaltungen des erfindungsgemäßen Verfahrens zur Bereitstellung von Medieninhalten und des erfindungsgemäßen Fahrzeugs ergeben sich auch aus den Ausführungsbeispielen, welche nachfolgend unter Bezugnahme auf die Figuren näher beschrieben werden.

Dabei zeigen:
- Fig. 1: eine Prinzipdarstellung eines Austauschs von an eine Bewegung eines Fahrzeugs angepassten Medieninhalten zwischen Fahrzeugen;
- Fig. 2: eine Prinzipdarstellung einer Zuordnung zweier Fahrzeuge mit einer ähnlichen Fahrdynamik zueinander;
- Fig. 3: eine Prinzipdarstellung einer Ausgabe von mit einem ersten Fahrzeug erzeugten Medieninhalten auf einer Anzeigeeinrichtung eines zweiten Fahrzeugs; und
- Fig. 4: ein Ablaufidagramm eines erfindungsgemäßen Verfahrens.

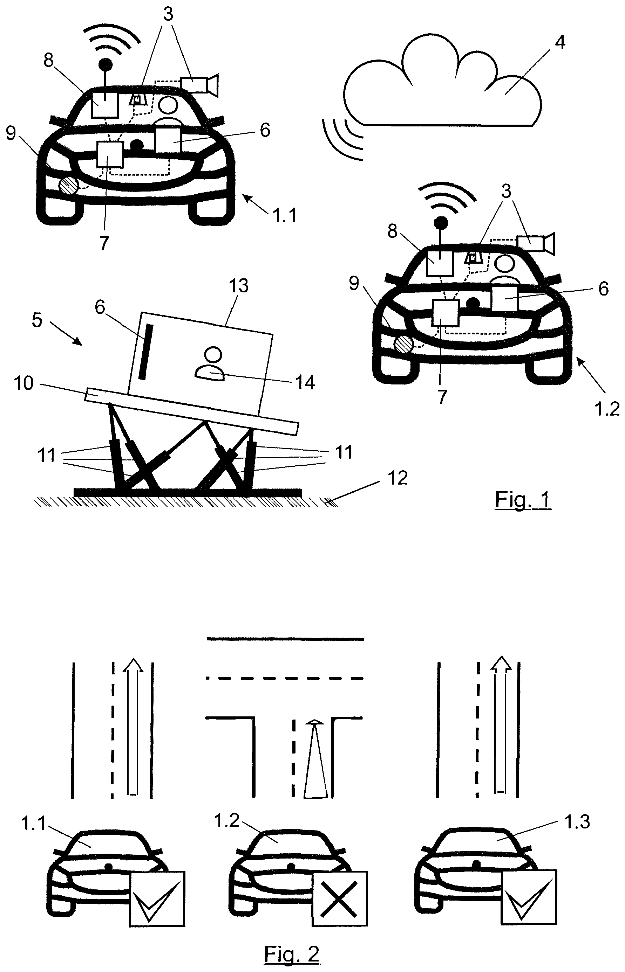

Figur 1 zeigt ein erstes erfindungsgemäßes Fahrzeug 1.1 und ein zweites erfindungsgemäßes Fahrzeug 1.2. Die jeweiligen Fahrzeuge 1.1 und 1.2 umfassen jeweils wenigstens eine Fahrzeugkamera 3, eine Recheneinheit 7, wenigstens eine Anzeigeeinrichtung 6 sowie eine drahtlose Kommunikationsschnittstelle 8. Ferner können die Fahrzeuge 1.1 und/oder 1.2 wenigstens einen Sensor 9 zur Erfassung von Zustandsinformationen, Umgebungsinformationen und/oder Audioaufnahmen aufweisen. Der Sensor 9 kann beispielsweise von einem Mikrofon, einem Temperaturfühler, einem Drehzahlsensor, einem Helligkeitssensor oder dergleichen ausgebildet sein.

Ein jeweiliges Fahrzeug 1.1, 1.2 kann auch mehrere Fahrzeugkameras 3 aufweisen. Die jeweiligen Fahrzeugkameras 3 können in unterschiedliche Richtungen orientiert sein. Beispielsweise kann eine erste Fahrzeugkamera 3 parallel zu einer Fahrzeuglängsachse ausgerichtet sein und einen in Vorausrichtung vor einem Fahrzeug 1.1, 1.2 liegenden Blickbereich erfassen. Wenigstens eine weitere Fahrzeugkamera 3 kann parallel zu einer Fahrzeugquerachse oder auch mit einem beliebigen Winkel gegenüber der Fahrzeuglängs- und Fahrzeugquerachse versetzt am Fahrzeug 1.1, 1.2 angeordnet sein. Somit können beispielsweise auch seitliche Bereiche und/oder ein rückwärtiger Bereich hinter einem Fahrzeug 1.1, 1.2 erfasst werden. Insbesondere kann eine Fahrzeugkamera 3 nicht nur sichtbares Licht, sondern auch Infrarotlicht erfassen. Dies ermöglicht eine Umgebungserfassung auch bei widrigen Sichtbedingungen wie bei Dunkelheit.

Die wenigstens eine Fahrzeugkamera 3 erzeugt Kamerabilder, die zur Verarbeitung an die Recheneinheit 7 übertragen werden. Durch Auswertung der Kamerabilder kann beispielsweise ein aktueller und/oder künftiger Streckenverlauf einer mit dem jeweiligen Fahrzeug 1.1, 1.2 befahrenen Strecke und/oder eine aktuelle und/oder künftige Verkehrssituation ermittelt werden. Durch Analyse des Streckenverlaufs und/oder der Verkehrssituation können dann künftige Fahrdynamikinformationen, sprich eine erwartete Fahrzeuggeschwindigkeit, Fahrzeugbeschleunigung und/oder ein Lenkwinkel des Fahrzeugs 1.1, 1.2 abgeschätzt werden.

Ferner erfasst das jeweilige Fahrzeug 1.1, 1.2 aktuelle Fahrdynamikinformationen. Diese können ebenfalls durch Auswertung der Kamerabilder und/oder durch Auswerten von mit wenigstens einem Sensor 9 erzeugten Sensordaten ermittelt werden. Beispielsweise kann wenigstens ein Sensor 9 als Beschleunigungssensor ausgeführt sein. Die aktuellen und künftigen Fahrdynamikinformationen werden zusammen mit den von der wenigstens einen Fahrzeugkamera 3 erzeugten Kamerabildern über die drahtlose Kommunikationsschnittstelle 8 an eine zentrale Recheneinheit 4, beispielsweise ein Cloud-Server, auch als Backend bezeichnet, verschickt. Als drahtlose Kommunikationstechnologie kann hierzu eine beliebige Funktechnologie wie Mobilfunk, WiFi, Bluetooth, NFC oder dergleichen verwendet werden. Die drahtlose Kommunikationsschnittstelle 8 kann insbesondere als Fahrzeug-zu-Fahrzeug-Kommunikationsschnittstelle und/oder Fahrzeug-zu-Infrastrukturschnittstelle ausgebildet sein.

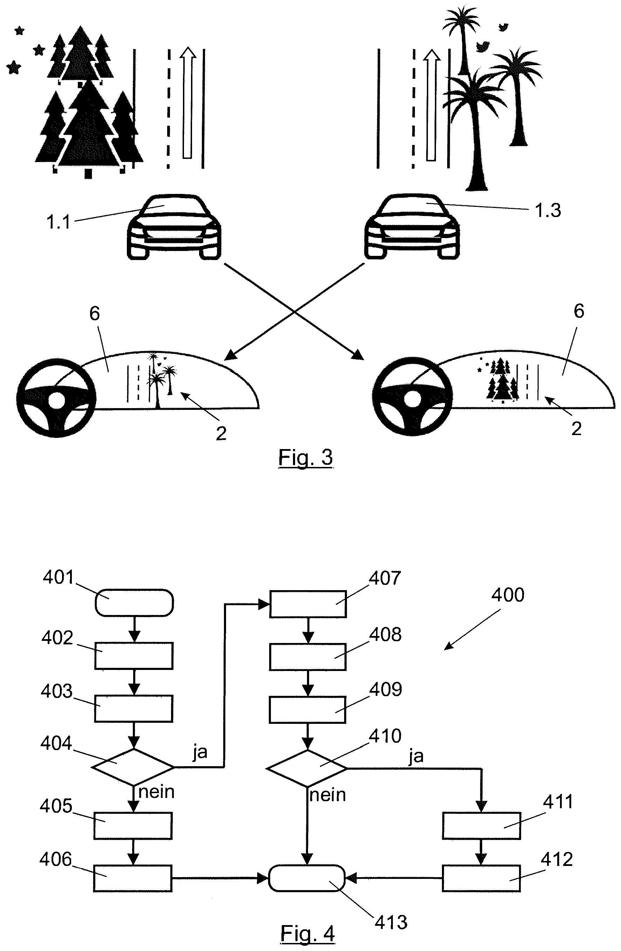

Die zentrale Recheneinheit 4 identifiziert wenigstens ein zweites Fahrzeug 1.2, dessen aktuelle und/oder künftigen Fahrdynamikinformationen innerhalb einer festgelegten Toleranzgrenze mit den aktuellen und/oder künftigen Fahrdynamikinformationen des ersten Fahrzeugs 1.1 übereinstimmen. Ist ein solches Fahrzeug gefunden, so werden die vom ersten Fahrzeug 1.1 aufgezeichneten Medieninhalte 2, welche in Figur 3 näher gezeigt sind, an das zweite Fahrzeug 1.2 übertragen und umgekehrt. Bei den Medieninhalten 2 handelt es sich um die Kamerabilder, sowie bei Bedarf um die aktuellen und/oder künftigen Fahrdynamikinformationen. Entsprechend werden vom zweiten Fahrzeug 1.2 aufgezeichnete Medieninhalte 2 über die zentrale Recheneinheit 4 an das erste Fahrzeug 1.1 übertragen. Die entsprechenden Medieninhalte 2 werden dann auf der Anzeigeeinrichtung 6 des jeweiligen Fahrzeugs 1.1, 1.2 ausgegeben.

Auch ist es möglich, dass die vom ersten Fahrzeug 1.1 aufgezeichneten Medieninhalte 2 von der zentralen Recheneinheit 4 an ein Drittgerät 5, beispielsweise einen Simulator, zur Ausgabe übertragen werden. In Figur 1 ist ein solches Drittgerät 5 gezeigt. Das Drittgerät 5, hier in Form des Simulators, umfasst eine Bewegungsplattform 10, welche über Aktoren 11, insbesondere sechs Aktoren 11, gegenüber einem stationären Boden 12 bewegbar ist. Auf die Bewegungsplattform 10 ist eine Kanzel 13 aufgesetzt, mit wenigstens einer Anzeigeeinrichtung 6, beispielsweise einer Leinwand zur Präsentation der Medieninhalte 2 eines Fahrgasts 14. Je nach Größe des Simulators kann die Kanzel 13 eine beliebige Anzahl an Sitzen aufweisen, damit die jeweiligen Fahrgäste 14 bequem und sicher die Medieninhalte 2 erfahren können. Dabei werden die Aktoren 11 gemäß eines durch Auswerten der aktuellen und/oder künftigen Fahrdynamikinformationen abgeleiteten Steuersignals bewegt. So können beispielsweise Beschleunigungskräfte, die mit einem Fahrzeug 1.1, 1.2 während einer Fahrt auftreten, auch im Simulator nacherlebt werden. Die Nutzung der künftigen Fahrdynamikinformationen erlaubt es, die Grenzen des Simulators auszureizen. So können bei der Ableitung der Steuerbefehle beispielsweise ein maximaler Aktorhub und/oder eine maximale Aktorbetätigungsgeschwindigkeit berücksichtigt werden, um die zuverlässige Wiedergabe der künftigen Fahrdynamikinformationen zu ermöglichen. So lässt sich beispielsweise verhindern, dass durch Erreichen eines Anschlags die Bewegungsplattform 10 nicht weiter gekippt werden kann, wodurch beispielsweise eine stärkere Beschleunigungskraft simuliert werden kann.

Figur 2 verdeutlicht, wie die zentrale Recheneinheit 4 mehrere Fahrzeuge 1.1, 1.3 mit identischer, sprich innerhalb der Toleranzgrenze übereinstimmender Fahrdynamik, ermittelt. Hierzu werden die von den Fahrzeugen 1.1, 1.2 und 1.3 an die zentrale Recheneinheit 4 übertragenen aktuellen und künftigen Fahrdynamikinformationen verglichen und Fahrzeuge 1.1, 1.3 mit übereinstimmenden Fahrdynamikinformationen zugeordnet. In dem Beispiel in Figur 2 fahren das erste Fahrzeug 1.1 und das dritte Fahrzeug 1.3 mit einer ähnlichen Geschwindigkeit, beispielsweise 130 km/h, respektiv 135 km/h, auf einem geraden Fahrbahnabschnitt geradeaus. Die Geschwindigkeit der Fahrzeuge 1.1 und 1.3 ist dabei konstant. Das zweite Fahrzeug 1.2 hingegen fährt mit einer negativen Beschleunigung auf eine T-Kreuzung zu und biegt dann nach links oder rechts ab. Da das zweite Fahrzeug 1.2 sich mit einer geringeren Geschwindigkeit fortbewegt, beispielsweise 50 km/h, und auch noch eine negative Beschleunigung auf das zweite Fahrzeug 1.2 aufgrund eines Bremsvorgangs wirkt, lassen sich die Fahrdynamikinformationen des zweiten Fahrzeugs 1.2 nicht mit denen des ersten und dritten Fahrzeugs 1.1, 1.3 korrelieren.

Figur 3 veranschaulicht die Wiedergabe von Medieninhalten 2 auf den jeweiligen Anzeigeeinrichtungen 6 des ersten und dritten Fahrzeugs 1.1, 1.3. So fährt das erste Fahrzeug 1.1 bei Dämmerung entlang eines Waldstücks. Beispielsweise könnte sich das erste Fahrzeug 1.1 in Alaska, dem Schwarzwald, Sibirien oder einer ähnlichen Region aufhalten. Das dritte Fahrzeug 1.3 hingegen fährt bei Sonnenschein entlang einer Strandpromenade, beispielsweise in Miami Beach, an der Côte d'Azur oder der Ligurischen Küste. Die von den jeweiligen Fahrzeugen 1.1 und 1.3 mittels der Fahrzeugkamera 3 aufgezeichneten Kamerabilder werden daraufhin mittels der drahtlosen Kommunikationsschnittstelle 8 und der zentralen Recheneinheit 4 an das jeweils andere Fahrzeug 1.3, 1.1 übertragen und auf den Anzeigeeinrichtungen 6 der Fahrzeuge 1.3, 1.1 ausgegeben. Dies ermöglicht es, den Fahrzeuginsassen der entsprechenden Fahrzeuge 1.1, 1.3 die mit dem anderen Fahrzeug 1.3, 1.1 aufgezeichneten Medieninhalte 2 wahrzunehmen. Hierdurch steigt ein Komfort für die jeweiligen Fahrzeuginsassen. So können sich die Fahrzeuginsassen in einer monotonen und langweiligen Fahrsituation ablenken. Dies ist insbesondere für autonom steuerbare Fahrzeuge von Bedeutung, da hier auch eine fahrzeugführende Person ihre Aktivität anderen Dingen als dem Fahrgeschehen widmen kann.

Über die Wahrnehmung der mit dem anderen Fahrzeug 1.3, 1.1 aufgezeichneten Medieninhalte 2 hinaus kann auch eine Kommunikation der Insassen von durch den Austausch von Medieninhalten 2 miteinander verbundenen Fahrzeugen 1.1, 1.3 ermöglicht werden. Diese kann beispielsweise durch das Anbieten einer Telefon- oder Chatverbindungen für die Insassen stattfinden. Dies erhöht die Attraktivität und Authentizität des Verfahrens für die Insassen.

Figur 4 zeigt ein Ablaufdiagramm 400 eines erfindungsgemäßen Verfahrens. In einem Verfahrensschritt 401 startet das Verfahren.

In einem Verfahrensschritt 402 wird von wenigstens einer Fahrzeugkamera 3 ein Kamerafeed abgegriffen. Zusätzlich können auch von wenigstens einem Sensor 9 erzeugte Sensordaten abgegriffen werden. Aus den Sensordaten kann bereits eine Fahrdynamik eines entsprechenden Fahrzeugs 1.1, 1.2, 1.3 ermittelt. Hierzu ist zumindest ein Sensor 9 dazu in der Lage, eine Fahrzeuggeschwindigkeit, Fahrzeugbeschleunigung und/oder einen Lenkwinkel zu messen.

Im Verfahrensschritt 403 wird ein Nutzer, sprich eine fahrzeugführende Person, identifiziert und ein der jeweiligen Person zugeordnetes Nutzerprofil geladen.

Im Verfahrensschritt 404 wird geprüft, ob ein Maschinenlernmodell zur Ermittlung der künftigen Fahrdynamikinformationen entsprechend eines nutzerspezifischen Profils ausreichend trainiert wurde, um aus dem Fahrverhalten des Nutzers die künftigen Fahrdynamikinformationen abzuleiten. Ist dies nicht der Fall, so werden im Verfahrensschritt 405 die aktuelle Fahrdynamik und Außenkameraaufnahmen aufgezeichnet und mit späteren Fahrdynamikdaten verglichen. Mit anderen Worten wird das Maschinenlernmodell mit Hilfe der aufgezeichneten aktuellen und späteren Fahrdynamikdaten trainiert, um aus Fahrdynamikdaten und Außenkameraaufnahmen künftige Fahrdynamikdaten abzuschätzen.

Im Verfahrensschritt 406 wird das Maschinenlernmodell weiter trainiert.

Ist das entsprechende Maschinenlernmodell hingegen ausreichend trainiert, so werden im Verfahrensschritt 407 von der Recheneinheit 7 aus wenigstens einem aus dem Kamerafeed extrahierten Kamerabild und/oder den Sensordaten die künftigen Fahrdynamikinformationen abgeschätzt.

Im Verfahrensschritt 408 werden die aktuellen und künftigen Fahrdynamikinformationen zusammen mit den Kamerabildern an die zentrale Recheneinheit 4 übertragen.

Im Verfahrensschritt 409 erfolgt von der zentralen Recheneinheit 4 ein Vergleich der an sie übermittelnden Fahrdynamikinformationen verschiedener Fahrzeuge 1.1, 1.2, 1.3. Dabei werden sowohl die aktuellen als auch die künftigen Fahrdynamikinformationen verwertet.

Im Verfahrensschritt 410 wird geprüft, ob es wenigstens zwei Fahrzeuge 1.1, 1.3 mit übereinstimmender Fahrdynamik gibt. Ist dies der Fall, werden im Verfahrensschritt 411 die von den jeweiligen Fahrzeugen 1.1, 1.3 aufgezeichneten Medieninhalte 2 ausgetauscht. Im Verfahrensschritt 412 schließlich werden dann die jeweiligen Medieninhalte 2 auf den Anzeigeeinrichtungen 6 des jeweiligen Fahrzeugs 1.1, 1.3 ausgegeben. Im Verfahrensschritt 413 schließlich endet das Verfahren.

## Patentansprüche

1. Verfahren zur Bereitstellung von auf die Bewegung eines Fahrzeugs (1.1, 1.2, 1.3) abgestimmten Medieninhalten (2) mit zumindest den folgenden Verfahrensschritten:
- Erfassen von aktuellen Fahrdynamikinformationen zumindest eines ersten Fahrzeugs (1.1);
- Abschätzen von künftigen Fahrdynamikinformationen zumindest des ersten Fahrzeugs (1.1);
- Übertragen der aktuellen und künftigen Fahrdynamikinformationen sowie von mit einer Fahrzeugkamera (3) aufgezeichneten Kamerabildern an eine zentrale Recheneinheit (4); **gekennzeichnet durch** folgende weitere Schritte
- Bereitstellen der aktuellen und/oder künftigen Fahrdynamikinformationen sowie der Kamerabilder von der zentralen Recheneinheit (4) zur Ausgabe mit einem Drittgerät (5); und/oder
- Identifizieren von zumindest den aktuellen und/oder den künftigen Fahrdynamikinformationen des ersten Fahrzeugs (1.1) innerhalb einer Toleranzgrenze entsprechenden aktuellen und/oder künftigen Fahrdynamikinformationen zumindest eines zweiten Fahrzeugs (1.2) von der zentralen Recheneinheit (4);
- Übertragen der aktuellen und/oder künftigen Fahrdynamikinformationen sowie der Kamerabilder zumindest des zweiten Fahrzeugs (1.2) an das erste Fahrzeug (1.1); und
- Ausgabe zumindest der Kamerabilder des zweiten Fahrzeugs (1.2) auf wenigstens einer Anzeigeeinrichtung (6) des ersten Fahrzeugs (1.1).

2. Verfahren nach Anspruch 1,
**dadurch gekennzeichnet, dass**
zusätzlich zu den Kamerabildern, sowie den aktuellen und/oder künftigen Fahrdynamikinformationen, Zusatzinformationen zur Ausgabe an wenigstens ein Drittgerät (5) und/oder wenigstens ein zweites Fahrzeug (1.2) übertragen werden.

3. Verfahren nach Anspruch 2,
**dadurch gekennzeichnet, dass**
zumindest eine der folgenden Größen als Zusatzinformation verwendet wird:
- einen Zustand des ersten Fahrzeugs (1.1) beschreibende Zustandsinformationen;
- einen Zustand der Umgebung des ersten Fahrzeugs (1.1) beschreibende Umgebungsinformationen; und/oder
- eine Audiospur, bevorzugt eine Audiospur in Form von Außenmikrofonaufnahmen.

4. Verfahren nach einem der Ansprüche 1 bis 3,
**dadurch gekennzeichnet, dass**
ein aktueller und/oder künftiger Streckenverlauf einer vom ersten Fahrzeug (1.1) befahrenen Strecke, eine aktuelle und/oder künftige Verkehrssituation und/oder eine Fahrtrajektorienplanung zur Ermittlung der künftigen Fahrdynamikinformationen berücksichtigt wird.

5. Verfahren nach Anspruch 4,
**dadurch gekennzeichnet, dass**
ein Streckenverlauf und/oder eine Verkehrssituation
- durch Bildanalyse zumindest eines von der Fahrzeugkamera (3) erzeugten Kamerabilds bestimmt wird;
- durch Extraktion einer aus einem Assistenzsystem ausgeleiteten Größe bestimmt wird; und/oder
- durch Analyse digitalen Kartenmaterials, insbesondere während einer aktiven Navigation, bestimmt wird.

6. Verfahren nach einem der Ansprüche 1 bis 5,
**dadurch gekennzeichnet, dass**
eine fahrzeugführende Person des ersten Fahrzeugs (1.1) identifiziert und ihr ein eindeutiges Profil zugeordnet wird.

7. Verfahren nach einem der Ansprüche 1 bis 6,
**dadurch gekennzeichnet, dass**
zum Abschätzen der künftigen Fahrdynamikinformationen Methoden des maschinellen Lernens eingesetzt werden.

8. Verfahren nach einem der Ansprüche 1 bis 7,
**dadurch gekennzeichnet, dass**
die zentrale Recheneinheit (4) die von verschiedenen Fahrzeugen (1.1, 1.2, 1.3) befahrenen Strecken miteinander vergleicht und Strecken mit einem über eine Mindeststreckenlänge innerhalb einer festgelegten Toleranzschwelle ähnlichem Streckenverlauf einander zuordnet.

9. Verfahren nach einem der Ansprüche 1 bis 8,
**dadurch gekennzeichnet, dass**
Nutzerpräferenzen für die Auswahl und/oder Darstellung von Medieninhalten (2) berücksichtigt werden.

10. Verfahren nach einem der Ansprüche 1 bis 9,
**dadurch gekennzeichnet, dass**
aus den von einem zweiten Fahrzeug (1.2) an das erste Fahrzeug (1.1) übertragenen Fahrdynamikinformationen zumindest ein Hinweis zur manuellen Steuerung des ersten Fahrzeugs (1.1) durch die fahrzeugführende Person abgeleitet wird und/oder zumindest ein Steuerbefehl zur zumindest teilautomatisierten Steuerung des ersten Fahrzeugs (1.1) abgeleitet wird.

11. Fahrzeug (1.1, 1.2, 1.3) mit wenigstens einer Fahrzeugkamera (3), einer Recheneinheit (7), einer drahtlosen Kommunikationsschnittstelle (8) und wenigstens einer Anzeigeeinrichtung (6), wobei die Fahrzeugkamera (3), die Recheneinheit (7), die drahtlose Kommunikationsschnittstelle (8) und die Anzeigerichtung (6) zur Durchführung eines Verfahrens nach einem der Ansprüche 1 bis 10 mit folgenden Verfahrensschritten eingerichtet sind:
- Erfassen von aktuellen Fahrdynamikinformationen zumindest eines ersten Fahrzeugs (1.1);
- Abschätzen von künftigen Fahrdynamikinformationen zumindest des ersten Fahrzeugs (1.1);
- Übertragen der aktuellen und künftigen Fahrdynamikinformationen sowie von mit einer Fahrzeugkamera (3) aufgezeichneten Kamerabildern an eine zentrale Recheneinheit (4); **gekennzeichnet durch**
- Bereitstellen der aktuellen und/oder künftigen Fahrdynamikinformationen sowie der Kamerabilder von der zentralen Recheneinheit (4) zur Ausgabe mit einem Drittgerät (5); und/oder
- Identifizieren von zumindest den aktuellen und/oder den künftigen Fahrdynamikinformationen des ersten Fahrzeugs (1.1) innerhalb einer Toleranzgrenze entsprechenden aktuellen und/oder künftigen Fahrdynamikinformationen zumindest eines zweiten Fahrzeugs (1.2) von der zentralen Recheneinheit (4);
- Übertragen der aktuellen und/oder künftigen Fahrdynamikinformationen sowie der Kamerabilder zumindest des zweiten Fahrzeugs (1.2) an das erste Fahrzeug (1.1); und
- Ausgabe zumindest der Kamerabilder des zweiten Fahrzeugs (1.2) auf wenigstens einer Anzeigeeinrichtung (6) des ersten Fahrzeugs (1.1).

12. Fahrzeug (1.1, 1.2, 1.3) nach Anspruch 11,
**gekennzeichnet durch**
eine zumindest teilautomatisierte Steuerung.

## Claims

1. Method for providing media content (2) adapted to the movement of a vehicle (1.1, 1.2, 1.3), comprising at least the following method steps:
- recording current driving dynamics information of at least a first vehicle (1.1);
- estimating future driving dynamics information of at least the first vehicle (1.1);
- transmitting the current and future driving dynamics information and camera images captured by a vehicle camera (3) to a central processing unit (4); **characterized by** the following further steps
- providing the current and/or future driving dynamics information and the camera images from the central processing unit (4) for output with a third-party device (5); and/or
- identifying current and/or future driving dynamics information of at least a second vehicle (1.2) which corresponds at least to the current and/or future driving dynamics information of the first vehicle (1.1) within a tolerance limit, by means of the central processing unit (4);
- transmitting the current and/or future driving dynamics information and the camera images of at least the second vehicle (1.2) to the first vehicle (1.1); and
- outputting at least the camera images of the second vehicle (1.2) on at least one display device (6) of the first vehicle (1.1).

2. Method according to claim 1,
**characterized in that**
in addition to the camera images and the current and/or future driving dynamics information, additional information is transmitted for output to at least one third-party device (5) and/or at least a second vehicle (1.2).

3. Method according to claim 2,
**characterized in that**
at least one of the following variables is used as additional information:
- state information describing a state of the first vehicle (1.1);
- environment information describing a state of the environment of the first vehicle (1.1); and/or
- an audio track, preferably an audio track in the form of external microphone recordings.

4. Method according to any of claims 1 to 3,
**characterized in that**
a current and/or future route course of a route traveled by the first vehicle (1.1), a current and/or future traffic situation, and/or a driving trajectory plan are taken into account to determine the future driving dynamics information.

5. Method according to claim 4,
**characterized in that**
a route course and/or a traffic situation
- is determined by image analysis of at least one camera image generated by the vehicle camera (3);
- is determined by extraction of a variable derived from an assistance system; and/or
- is determined by analysis of digital map material, in particular during active navigation.

6. Method according to any of claims 1 to 5,
**characterized in that**
a person driving the first vehicle (1.1) is identified and a unique profile is assigned to them.

7. Method according to any of claims 1 to 6,
**characterized in that**
machine learning methods are used to estimate the future driving dynamics information.

8. Method according to any of claims 1 to 7,
**characterized in that**
the central processing unit (4) compares the routes traveled by different vehicles (1.1, 1.2, 1.3) and assigns routes which have a similar route course over a minimum route distance, within a specified tolerance threshold, to one another.

9. Method according to any of claims 1 to 8,
**characterized in that**
user preferences for the selection and/or display of media content (2) are taken into account.

10. Method according to any of claims 1 to 9,
**characterized in that**
at least one indication for the manual control of the first vehicle (1.1) by the person driving the vehicle and/or at least one control command for the at least partially automated control of the first vehicle (1.1) is derived from the driving dynamics information transmitted from a second vehicle (1.2) to the first vehicle (1.1).

11. Vehicle (1.1, 1.2, 1.3) comprising at least one vehicle camera (3), a computing unit (7), a wireless communication interface (8) and at least one display device (6), the vehicle camera (3), the processing unit (7), the wireless communication interface (8) and the display device (6) being configured to carry out a method according to any of claims 1 to 10 having the following method steps:
- recording current driving dynamics information of at least a first vehicle (1.1);
- estimating future driving dynamics information of at least the first vehicle (1.1);
- transmitting the current and future driving dynamics information and camera images captured by a vehicle camera (3) to a central processing unit (4); **characterized by**
- providing the current and/or future driving dynamics information and the camera images from the central processing unit (4) for output with a third-party device (5); and/or
- identifying current and/or future driving dynamics information of at least a second vehicle (1.2) which corresponds at least to the current and/or future driving dynamics information of the first vehicle (1.1) within a tolerance limit, by means of the central processing unit (4);
- transmitting the current and/or future driving dynamics information and the camera images of at least the second vehicle (1.2) to the first vehicle (1.1); and
- outputting at least the camera images of the second vehicle (1.2) on at least one display device (6) of the first vehicle (1.1).

12. Vehicle (1.1, 1.2, 1.3) according to claim 11,
**characterized by**
at least partially automated control.

## Revendications

1. Procédé permettant de fournir des contenus multimédias (2) adaptés au déplacement d'un véhicule (1.1, 1.2, 1.3) comportant au moins les étapes de procédé suivantes :
- acquisition d'informations de dynamique de conduite actuelles d'au moins un premier véhicule (1.1) ;
- estimation d'informations de dynamique de conduite au moins du premier véhicule (1.1) ;
- transmission à une unité de calcul centrale (4) des informations de dynamique de conduite actuelles et futures ainsi que d'images de caméra enregistrées avec une caméra de véhicule (3) ; **caractérisé par** les étapes supplémentaires suivantes
- fourniture des informations de dynamique de conduite actuelles et/ou futures ainsi que des images de caméra à partir de l'unité de calcul centrale (4) pour une sortie avec un appareil tiers (5) ; et/ou
- identification par l'unité de calcul centrale (4) d'informations de dynamique de conduite actuelles et/ou futures d'au moins un second véhicule (1.2) correspondant au moins aux informations de dynamique de conduite actuelles et/ou futures du premier véhicule (1.1) à l'intérieur d'une limite de tolérance ;
- transmission des informations de dynamique de conduite actuelles et/ou futures ainsi que des images de caméra d'au moins le second véhicule (1.2) au premier véhicule (1.1) ; et
- sortie au moins des images de caméra du second véhicule (1.2) sur au moins un dispositif d'affichage (6) du premier véhicule (1.1).

2. Procédé selon la revendication 1,
**caractérisé en ce que**
en plus des images de caméra, ainsi que des informations de dynamique de conduite actuelles et/ou futures, des informations supplémentaires sont transmises pour être sorties à au moins un appareil tiers (5) et/ou au moins un second véhicule (1.2).

3. Procédé selon la revendication 2,
**caractérisé en ce que**
au moins une des grandeurs suivantes est utilisée comme informations supplémentaires :
- des informations d'état décrivant un état du premier véhicule (1.1) ;
- des informations d'environnement décrivant un état de l'environnement du premier véhicule (1.1) ; et/ou
- une piste audio, de préférence une piste audio sous forme d'enregistrements de microphones extérieurs.

4. Procédé selon l'une des revendications 1 à 3,
**caractérisé en ce que**
un tracé actuel et/ou futur d'un trajet emprunté par le premier véhicule (1.1), une situation de trafic actuelle et/ou future et/ou une planification de trajectoire de conduite sont pris en compte pour déterminer les informations de dynamique de conduite futures.

5. Procédé selon la revendication 4,
**caractérisé en ce qu'un** tracé et/ou une situation de trafic
- sont déterminés par analyse d'image d'au moins une image de caméra générée par la caméra de véhicule (3) ;
- sont déterminés par extraction d'une grandeur dérivée d'un système d'assistance ; et/ou
- sont déterminés par analyse de données cartographiques numériques, en particulier pendant une navigation active.

6. Procédé selon l'une des revendications 1 à 5,
**caractérisé en ce que**
une personne conduisant le premier véhicule (1.1) est identifiée et un profil unique lui est attribué.

7. Procédé selon l'une des revendications 1 à 6,
**caractérisé en ce que**
des procédés d'apprentissage automatique sont utilisés pour estimer les informations de dynamique de véhicule futures.

8. Procédé selon l'une des revendications 1 à 7,
**caractérisé en ce que**
l'unité de calcul centrale (4) compare entre eux les trajets parcourus par différents véhicules (1.1, 1.2, 1.3) et associe entre eux des trajets dont le tracé est similaire sur une longueur de trajet minimale à l'intérieur d'un seuil de tolérance établi.

9. Procédé selon l'une des revendications 1 à 8,
**caractérisé en ce que**
les préférences des utilisateurs sont prises en compte pour la sélection et/ou la présentation des contenus multimédias (2).

10. Procédé selon l'une des revendications 1 à 9,
**caractérisé en ce que**
à partir des informations de dynamique de conduite transmises par un second véhicule (1.2) au premier véhicule (1.1), au moins une indication pour la commande manuelle du premier véhicule (1.1) par la personne conduisant le véhicule est déduite et/ou au moins une instruction de commande pour la commande au moins partiellement automatisée du premier véhicule (1.1) est déduite.

11. Véhicule (1.1, 1.2, 1.3) comportant au moins une caméra de véhicule (3), une unité de calcul (7), une interface de communication sans fil (8) et au moins un dispositif d'affichage (6), dans lequel la caméra de véhicule (3), l'unité de calcul (7), l'interface de communication sans fil (8) et le dispositif d'affichage (6) sont conçus pour la réalisation d'un procédé selon l'une des revendications 1 à 10 comportant les étapes de procédé suivantes :
- acquisition d'informations de dynamique de conduite actuelles d'au moins un premier véhicule (1.1) ;
- estimation d'informations de dynamique de conduite au moins du premier véhicule (1.1) ;
- transmission à une unité de calcul centrale (4) des informations de dynamique de conduite actuelles et futures ainsi que d'images de caméra enregistrées par une caméra de véhicule (3) ; **caractérisé par**
- fourniture des informations de dynamique de conduite actuelles et/ou futures ainsi que des images de caméra à partir de l'unité de calcul centrale (4) pour une sortie avec un appareil tiers (5) ; et/ou
- identification par l'unité de calcul centrale (4) d'informations de dynamique de conduite actuelles et/ou futures d'au moins un second véhicule (1.2) correspondant au moins aux informations de dynamique de conduite actuelles et/ou futures du premier véhicule (1.1) à l'intérieur d'une limite de tolérance ;
- transmission des informations de dynamique de conduite actuelles et/ou futures ainsi que des images de caméra d'au moins le second véhicule (1.2) au premier véhicule (1.1) ; et
- sortie au moins des images de caméra du second véhicule (1.2) sur au moins un dispositif d'affichage (6) du premier véhicule (1.1).

12. Véhicule (1.1, 1.2, 1.3) selon la revendication 11,
**caractérisé par**
une commande au moins partiellement automatisée.
